(19) Europäisches Patentamt
European Patent Office
Office européen des brevets

(11) **EP 0 977 149 A2**

(12) **EUROPEAN PATENT APPLICATION**

(43) Date of publication:
02.02.2000 Bulletin 2000/05

(51) Int. Cl.⁷: **G06T 5/00**

(21) Application number: **99301436.4**

(22) Date of filing: **26.02.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.07.1998 US 123663**

(71) Applicant:
**Lockheed Martin Corporation**
**Bethesda, MD 20817 (US)**

(72) Inventor: **Petty, Joe V.**
**Highlands Ranch, Colorado 80126 (US)**

(74) Representative:
**Pratt, Richard Wilson et al**
**D. Young & Co,**
**21 New Fetter Lane**
**London EC4A 1DA (GB)**

(54) **Method and system for accentuating non-stochastic features in an image**

(57)    A method and system for processing imagery to enhance the structure of an image so that non-stochastic features are more noticeable to a viewer is disclosed. Generally, the method and system of the present invention seek to process first image data including a non-stochastic effects signal and a stochastic effects signal to alter the spatial frequency of the stochastic effects signal to produce enhanced first image data, and displaying an enhanced first image corresponding to the enhanced first image data.

Fig. 1

EP 0 977 149 A2

**Description**

The present invention relates to a method and system for accentuating non-stochastic features in an image. An illustrative embodiment of the present invention relates to a method and system for processing image data to enhance or accentuate non-stochastic features relative to stochastic effects of the image data, and in particular, relates to processing image data from one of an optical, infrared, and synthetic aperture radar imaging system to accentuate the non-stochastic features relative to the stochastic effects, such that the non-stochastic features are more noticeable to a viewer of the processed image.

Generally, for purposes of obtaining images of a particular area of interest from an air-based or space-based platform, optical (e.g., visible), infrared and synthetic aperture radar systems have been utilized. However, the capability of current optical, infrared and synthetic aperture radar systems to detect and/or classify obscured objects of interest or objects with weak signatures is limited. For example, in instances where one or more cultural objects are obscured by cloud cover, use of images from current optical and infrared systems to detect and/or classify the obscured cultural object is extremely limited, if not impossible. Of course, in such instances where the cultural object of interest is covered by clouds, a synthetic aperture radar system may be utilized to image the area of interest. However, such synthetic aperture radar systems may not be readily available for use to image the particular area or cultural object of interest. In addition, in instances where the cultural object of interest is obscured by foliage (e.g., trees) or soil, a synthetic aperture radar system may not have the capability to provide a suitable image of the cultural object or objects of interest. As such, there is a need for a system and methodology for enhancing objects and/or structures (e.g., non-stochastic features) in images, especially relative to stochastic effects (e.g., clutter).

Aspects of the invention are specified in the claims, to which attention is invited.

Accordingly one aspect of the present invention seeks to provide a system and methodology for processing image data from one of an optical, infrared and synthetic aperture radar system, the image data including non-stochastic feature signals (e.g., cultural object(s)) and stochastic effects signals (e.g., graininess or speckle due to clutter or corruption), to enhance the non-stochastic features relative to the stochastic effects.

An embodiment of the present invention seeks to provide a system and methodology for processing digital image data to accentuate non-stochastic features relative to stochastic effects in an image corresponding to the image data, such that the non-stochastic features are more readily discernable to a viewer of the image.

Another embodiment of the present invention seeks to provide a system and method for accentuating non-stochastic features relative to stochastic effects, such system and method being cascadable with other image enhancement techniques to enhance the efficacy of such accentuation.

The method and system of the embodiments of the present invention seeks to enhance the structure of the image. Generally, the method and system of the embodiments of the present invention seeks to accentuate the signature of one or more cultural objects or structures (e.g., non-stochastic features, such as air-based, sea-based and land-based vehicles, and man-made structures, such as buildings, mine arrays, etc.) relative to stochastic effects (e.g., graininess or speckle due to clutter or corruption) in an image. More specifically, the method and system seek to accentuate at least a first image having first image data, such that a human observer or viewer of the processed image is better able to identity or discern (e.g., notice) one or more objects or an array of objects, the first image data including a non-stochastic feature signal(s) (e.g., a first object signature, a first replicated object signature) corresponding to one or more non-stochastic features and a stochastic effects signature corresponding to stochastic effects in the pixel domain.

Generally, the method and system of embodiments of the present invention seek to accentuate at least the first image having first image data including non-stochastic feature and stochastic effects signals corresponding to stochastic effects functions to process at least the first image data to at least alter or modify the spatial frequency characteristics of the stochastic effects signals, such that at least the first non-stochastic feature is more noticeable to a viewer of the accentuated first image. Such processing may also function to increase a contrast corresponding to at least the first non-stochastic feature signal relative to the stochastic effects signals from a first contrast level to a second contrast level. In this regard, the system and method of embodiments of the present invention is based upon a recognition that the response of the human eye to stochastic effects, such as graininess or speckle due to corruption/clutter, varies the frequency of the imagery, even where the average intensity of the stochastic effects are less than or even the same or greater than the average intensity of the non-stochastic features. As such, embodiments of the present invention are particularly useful for processing optical, infrared and synthetic aperture radar system imagery to make a non-stochastic feature more noticeable to the human viewer even in instances where the average intensity of the non-stochastic feature is the same as or less than the average intensity of the stochastic effects.

In a further embodiment, the present invention seeks to provide a method for processing at least first image data including at least a first non-stochastic feature signal and stochastic effects signal corresponding to at least a first non-stochastic feature and stochastic effects in the pixel domain in accordance with a unit gain response curve (e.g., Human Visual Response curve) having at least first and second regions. Generally, spatial frequencies (e.g., in the spatial frequency domain) of both the first non-stochastic feature signal and the stochastic effects signal of the first image data (e.g., input image data) are initially within the first region. In some instances, the first non-stochastic feature corresponding to the first non-stochastic feature signal may not be significantly noticeable to a viewer of the first image for exploitation purposes even where the non-stochastic feature signal has an amplitude greater than that of the stochastic effects signal. In other instances, the amplitude of the first non-stochastic feature signal may even be the same or even less than the amplitude of the stochastic effects signal, which may make the first non-stochastic feature even less noticeable to the viewer. Accordingly, the method may include the step of processing at least the first image data, which is digital in nature, to alter the spatial frequency of the stochastic effects signal relative to at least the first non-stochastic feature signal to produce first enhanced image data, and the step of displaying at least a first enhanced image corresponding to the first enhanced image data. In one embodiment, due to such processing, the spatial frequency of the stochastic effects signal of the first enhanced image data is altered or modified, such that the spatial frequency of the stochastic effects signal is in the second region of the unity gain response curve, which results in an enhanced ability of a human viewer of the first enhanced image to notice at least the first non-stochastic feature. More specifically, the spatial frequency of the stochastic effects signals may be altered to have one of a decreased and an increased spatial frequency relative to the spatial frequency of the stochastic effects signals of the input first image data. The step of processing may also result in increasing the contrast of at least the first non-stochastic feature signal relative to the stochastic effects signals from a first contrast level to a second contrast level to further enhance the noticeability of non-stochastic features relative to stochastic effects in the enhanced image.

In yet another embodiment, the method of accentuating or enhancing the first image data to accentuate at least the non-stochastic features relative to the stochastic effects may include the steps of applying a two-dimensional Fourier transform to transform the first image data into first amplitude and phase data in the spatial frequency domain, the first phase data including a spatial frequency of the phase of the non-stochastic feature signal and a spatial frequency of the phase of the stochastic effects signal, and the first amplitude data including a spatial frequency of the amplitude of the non-stochastic feature signature and a spatial frequency of the amplitude of the stochastic effects signal, substituting a unity value for the spatial frequencies of the amplitudes of the non-stochastic feature signal and the stochastic effects signal, applying an inverse two-dimensional Fourier transform to inverse transform the spatial frequencies of the phase and unity amplitude of the non-stochastic feature signal and the stochastic effects signal into the phase and unity amplitude of the non-stochastic feature signal and the amplitude of the stochastic effects signal in the pixel domain, detecting and normalizing the output from the inverse two-dimensional Fourier transform to whiten the stochastic effects signal relative to the non-stochastic feature signal, and modulating the detected and normalized image data with the first image data to produce the first enhanced image data. Thereafter, a first enhanced image corresponding to the first enhanced image data may be displayed (e.g., soft copy for viewing on a screen or hard copy) to a viewer. Such accentuation of at least the non-stochastic feature signal provides enhanced viewing and exploitation of the enhanced image corresponding to the first enhanced image data by a user.

In a further embodiment, the system and method of the present invention may further include, after the modulation of the input image data with the detected and normalized image data, shadow tuning the first enhanced or accentuated image data. Such shadow tuning of the first enhanced image data is especially useful to vary the enhanced image data from a very mild object to background improvement to an extreme of heavy object enhancement at the expense of severely reduced background. Such shadow tuning is particularly useful in connection with enhancing synthetic aperture radar imagery to detect obscured non-stochastic features, such as obscured replicated objects (e.g., a mine array buried beneath a thin layer of soil).

In yet a further embodiment of the present invention, the system and method of the present invention may be used or cascaded with other image enhancement techniques in order to further enhance or accentuate an image enhancable according to the system and method of the present invention. For instance, the system and method of the present invention may be used in conjunction with a number of image enhancement techniques, such as a cepstral filter system/methodology (which will be described in more detail hereinbelow), and other conventional image enhancement systems and methodologies, such as histogram modification and moment matching. Generally, the cepstral filter method and system seeks to perform or conduct a homomorphic (e.g., cepstral) analysis on at least first image data corresponding to a first image from at least one of an optical, infrared and synthetic aperture radar imaging system and displaying an output of the homomorphic analysis in at least one of the spatial quefrency domain and the pixel domain to detect at least one of an obscured first cultural object (e.g., man-made structures or effects, such as buildings, air-based, sea-based or land-based vehicles, heat trails, such as plumes, or shadows attributable thereto, etc.) and an obscured first replicated object or structure (e.g., an array or pattern of objects, such as mines, etc.). More specifically, two-dimensional spatial image data (e.g., digital or, in some instances, analog) in the pixel domain comprising signals or signatures corresponding to at least the obscured first cultural object and/or the obscured first replicated object (e.g., non-stochastic feature(s)) may be analyzed using a cepstral analysis to attenuate signals corresponding to corruption or clutter (e.g., stochastic effects) relative to the first cultural object signal and/or the first replicated object signature, and/or to enhance the first cultural object signal and/or the first replicated object signature. As a result, obscuration of at least the first cultural object and/or the first replicated object may be reduced or attenuated, such that the first cultural object and/or the first replicated object is detectable and/or classifiable. Thereafter, the enhanced image data from the cepstral filter system/methodology may be processed as herein described to accentuate at least one of the obscured first cultural object and/or the obscured first replicated object (e.g., non-stochastic feature(s)) relative to the corruption or clutter (e.g., stochastic effects), such that the non-stochastic features are more noticeable to the viewer of the resulting image.

For a better understanding of the present invention reference will be made, by way of example, to the accompanying drawings in which:

Fig. 1 is a flow chart illustrating one embodiment of the method of the present invention;
Fig. 2 is a flow chart illustrating another embodiment of the method of the present invention;
Fig. 3 is a flow chart illustrating yet another embodiment of the method of the present invention;
Fig. 4 illustrates a two-dimensional cepstrum with corruption energy concentrated in the center thereof;
Fig. 5 is a flow chart illustrating another embodiment of the method of the present invention;
Figs. 6A-6B is a plot of a quadruple triangle signal in a time series domain and in the cepstrum;
Figs. 7A-7B is a plot of a quadruple triangle signal in the time series domain and in the cepstrum;
Figs. 8A-8B is a plot of a single triangle signal in the time series domain and the cepstrum;
Fig. 9 is a plot of a replicated signal and corruption in the cepstrum;
Fig. 10 shows a diagrammatic illustration of one embodiment of the system of the present invention;
Fig. 11 shows a diagrammatic illustration of another embodiment of the system of the present invention;
Fig. 12 is a plot of a Human Eye Frequency Response curve;
Fig. 13 is a plot of a unit gain response curve in accordance with an embodiment of the method and system of the present invention;
Fig. 14 is a flow chart illustrating one embodiment the method of another aspect of the present invention, in relation to the curve illustrated in Fig. 13;
Fig. 15 is a flow chart illustrating another embodiment of the method of the present invention; and
Fig. 16 shows a diagrammatic illustration of one embodiment of the system of the present invention.

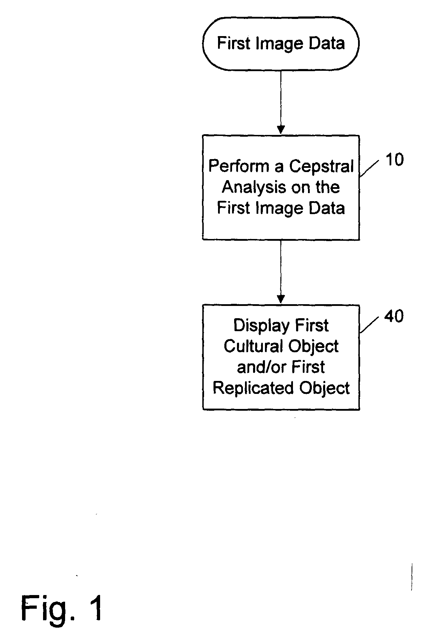

Figs. 1-11 illustrate the various features of embodiments of the method and system of the present invention. Generally, the method and system of embodiments of the present invention seeks to process image data relating to images collected by an optical imaging system (e.g., real image data), an infrared imaging system (e.g., real image data) and/or a synthetic aperture radar imaging system (e.g., real or complex image data) to detect and/or classify a cultural object and/or replicated object. Embodiments of the method and system of the present invention are especially useful for detecting and/or classifying such cultural and replicated objects that are hidden by stochastic obscuration. For example, a method and system of the present invention may be used to detect and/or classify cultural and/or replicated objects obscured by cloud cover in optical or infrared imagery and/or to detect and/or classify cultural and/or replicated objects obscured by tree foliage or a thin layer of soil or water in synthetic aperture radar imagery. In this regard, the illustrative cepstral method and system of the present invention are particularly useful for low to very low signal-to-background ratio cases, with zero or lower decibel (dB) not being uncommon.

Generally, the method and system described herein involves the processing of some given image data, real or complex, where a large amount of stochastic corruption prevents signals of interest, both discrete and signals which are comprised of a replicated signature, from being readily evident to users of the image data. More specifically, embodiments of the method of the present invention seeks to process image data (e.g., digital or analog) from an optical, infrared and/or synthetic aperture radar imaging system to detect and/or classify a cultural object and/or a replicated object which is obscured. In this regard, the method seeks to separate desirable signals or data (e.g., a signal from a cultural object, a signature of replicated object) in a first image data from undesirable signals or data (e.g., corruption signals corresponding to obscuration) in the first image data, and to retain the desirable signals while rejecting the undesirable signals. As such, embodiments of the method of the present invention functions to process the first image data to attenuate the corruption signals within the first image data and/or to enhance the replicated object signature in the first image data, if any.

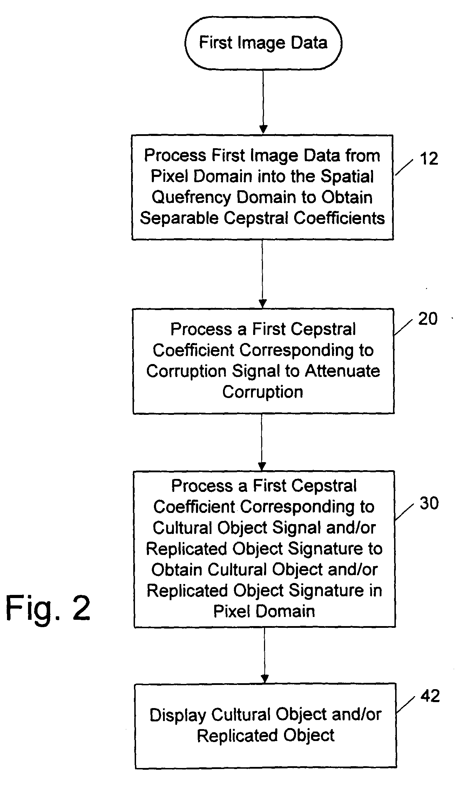

Referring to Fig. 1, embodiments of the method of the present invention generally includes the step of performing (10) a cepstral analyses on the first image data to attenuate or reject at least a portion of the corruption signal in the first image data and/or to enhance the first replicated object signature and the step of displaying (40) at least a first cultural object and/or a first replicated object in the pixel domain and/or the spatial quefrency domain to detect and/or classify the same. More specifically, and referring to Fig. 2, one embodiment of the method of the present invention seeks to process image data to detect and/or classify at least one cultural object, the image data obtained from an optical, and infrared and/or a synthetic aperture radar imaging system and including signals corresponding to at least a first cultural object and/or a first replicated object convolved with corruption. In this embodiment of the method of the present invention, the method includes the step of processing (12) the first image data from the pixel domain into the spatial quefrency domain in order to obtain separable cepstral coefficients which correspond to at least portions of the corruption signal, the cultural object signal and/or the replicated object signature. For purposes of rejecting the corruption signal while retaining the cultural object signal and/or the replicated object signature, the method further includes the step of processing (20) at least a first cepstral coefficient corresponding to the corruption signal to attenuate at least a portion of the corruption signal. Finally, the method further includes the step of processing (30) at least a first cepstral coefficient corresponding to the cultural object signal and/or the replicated object signature to obtain at least a portion of the cultural object signal and/or at least a portion of the replicated object signature in the pixel domain, and the step of displaying (40) at least a portion of the cultural object and/or the replicated object corresponding to at least the portion of the cultural object signal and/or at least the portion of the replicated object signature in the pixel domain to detect and/or classify the same.

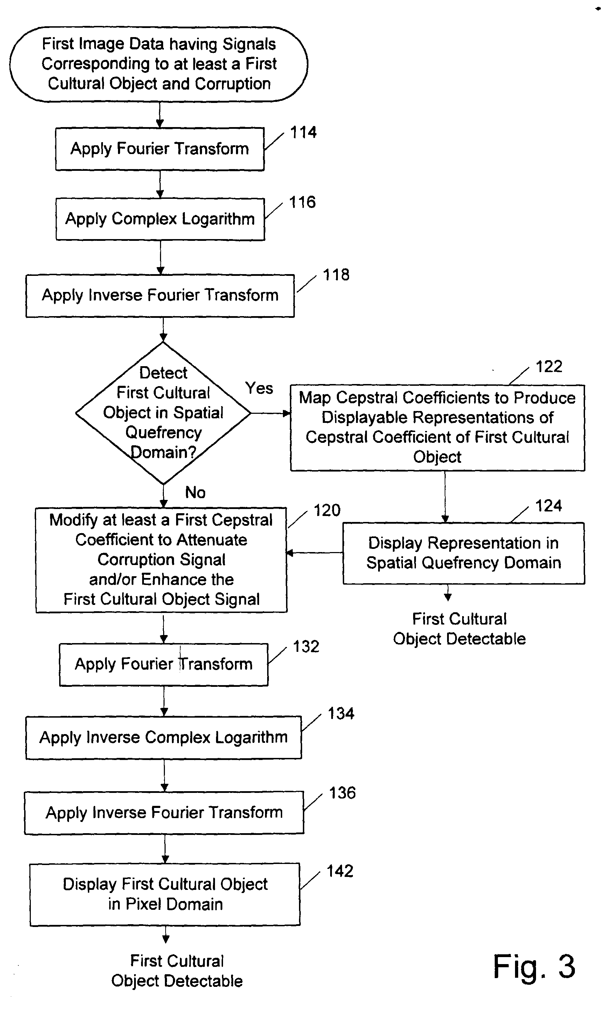

In one embodiment of the method of the present invention, illustrated in Fig. 3, the first image data "a(x, y)" includes a first cultural object signal corresponding to a first cultural object convolved with a corruption signal corresponding to an obscuration:

$$a(x, y) = d(x, y)**c(x, y) + w(x, y), \text{ where } x, y = 0, 1, \ldots, N-1$$

where "c(x, y)" corresponds to corruption, "w(x, y)" corresponds to noise (e.g., system noise), and "d(x, y)" corresponds to the true image, where:

$d(x, y) = \Sigma \gamma_k r(x-x_k, y-y_k) + g(x, y)$, where "$\gamma$" is a scale factor, "k" corresponds to the number of repeated signals, "$r(x-x_k, y-y_k)$" corresponds to a replicated object and "g(x, y)" corresponds to a cultural structure or object. The method includes the steps of applying (114) a two-dimensional Fourier transform (e.g., fast Fourier transform, discrete Fourier transform) to the first image data "a(x, y)" which is in the pixel domain to transform the first image data "a(x, y)" into at least a first discrete term "A(u, v)" in the spatial frequency domain. A graphic representation of applying the Fourier transform is provided hereinbelow:

$F [a +j0] \rightarrow A$, wherein "A", per the two-dimensional Fourier convolution and shift theorems:

$$A(u, v) = D(u, v) C(u, v) + W(u, v),$$

where $D(u, v) = R(u, v) H(u, v) + G(u, v)$, and

$H(u, v) = \Sigma \gamma_k \exp\{-2\pi j [ux_k + vy_k]/K\}$, whereby "H(u, v)" corresponds to an amplification factor, "R(u, v)" corresponds to the replicated object signature, "G(u, v)" corresponds to the cultural object, "C(u, v)" corresponds to the corruption signal, and "W(u, v)" corresponds to system noise in the spatial frequency domain. The index "k" runs from zero (0) to K.

In this embodiment, where the first image data "a(x, y)" includes only a cultural object and not a replicated object, the first discrete term "A(u, v)" corresponds to a product of the spatial frequency of the first cultural object signal "G(u, v)" and the spatial frequency of the corruption signal "C(u, v)",

$$\text{First Discrete Term "A(u, v)"} \cong G(u, v) C(u, v).$$

In this regard, stochastic corruption in the first image data which is in the form of a convolution with the cultural object signals in the first image data becomes a product in the spatial frequency domain of the first cultural object signal times the stochastic corruption factor. In instances where the first image data could also include a replicated object signature, "r(x, y)", such that a first replicated term is produced by applying the two-dimensional Fourier transform,

$$\text{First Replicated Term "A(u, v)"} \cong R(u, v) H(u, v) C(u, v),$$

the method further includes the step of filtering (e.g., linear filtering) the output of the Fourier transform to pass only the first discrete term or the replicated term. In this regard, in instances where the first image data may contain a replicated object signature, but only the cultural object is of interest, a linear filter may be used to pass only the first discrete term corresponding to a product of the spatial frequency of the first cultural object signal "G(u, v)" and the spatial frequency of the corruption signal "C(u, v)".

In the embodiment illustrated in Fig.3, the method further includes the step of applying (116) in the spatial frequency domain a complex logarithm to the first discrete term "A(u, v)", the output of which is a discrete sum "CLOG (A(u, v))" comprising a sum of the complex logarithms of the spatial frequencies of the first cultural object signal and the corruption signal:

First Discrete Sum "CLOG (A(u, v))" = CLOG(G(u, v) C(u, v))

$\cong$ CLOG (G(u, v)) + CLOG (C(u, v)) + 2$\pi$j N(G(u, v), C(u, v)),

where "CLOG" is a Complex Logarithm, and N( ) is 0, $\pm$1.

The object of the step of applying (116) the complex logarithm is to take advantage of the property that the logarithm of a product is equal to the sum of the logarithms of the individual factors of the product, plus a phase term ($2\pi$j) x (integer), where $j^2$ = -1, where the integer is $\pm$1 or 0. As such, each factor of interest (e.g., cultural object signal, corruption signal), either for retention or rejection, is represented as a term in a sum and can thus be operated upon by well-established linear methods of signal processing, which are discussed hereinbelow. In this regard, this embodiment of the method of the present invention further includes the step of applying (118) an inverse Fourier transform to the discrete sum to transform the discrete sum into cepstral coefficients corresponding to the cultural object signal and the corruption signal in the spatial quefrency domain:

$$F^{-1}[\text{First Discrete Sum "CLOG (A(u, v))"}] = F^{-1}[\text{CLOG (G(u, v)) + CLOG (C(u, v))}]$$
$$= F^{-1}[\text{CLOG (G(u, v))}] + F^{-1}[\text{CLOG (C(u, v))}]$$

For purposes of rejecting at least a portion of the stochastic corruption of the first image data while retaining the image data corresponding to the cultural object signal, the method further includes the step of modifying (120) in the spatial quefrency domain at least a first cepstral coefficient corresponding to the corruption signal to attenuate at least a portion of the corruption signal. Additionally, the method may optionally include the step of modifying (120) in the spatial quefrency domain at least a first cepstral coefficient corresponding to the first cultural object signal to enhance the first cultural object signal by applying a gain greater than unity.

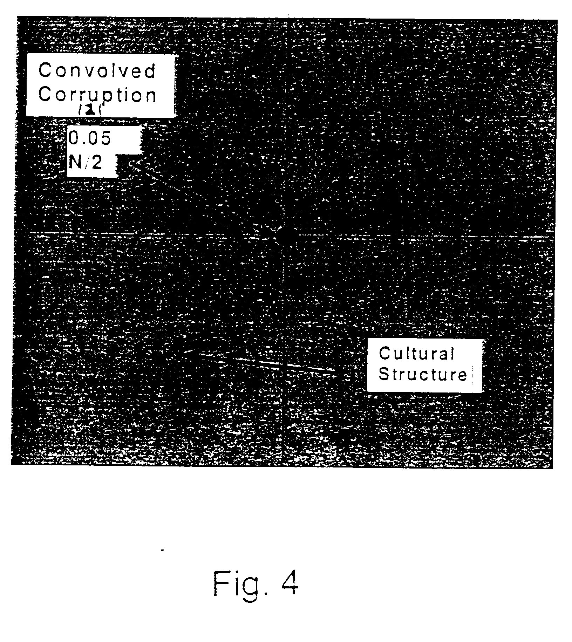

Referring to Fig. 4, the method may include the step of mapping (122) the cepstral coefficients to provide the human analyst with a visual means of inspecting the structure of the cepstrum. Mapping is required to fit the cepstral coefficients, which typically range over several orders of magnitude, into a range from zero (0) to two-hundred fifty-five (255) for digital display. This can be done by the standard linear mapping from the minimum and maximum of the cepstral coefficients to the range 0-255. Alternatively, the cepstral coefficient mean, standard deviation can be matched to values in the 0-255 range (e.g., 64 and 32). For imagery with corruption energy convolved in the pixel domain, the corresponding energy in the spatial quefrency domain is concentrated in the center of the two dimensional cepstrum with the cultural structure of the image somewhat removed therefrom, as illustrated in Fig. 4 for an "N x N" input pixel image. The black circle (121) containing the convolved corruption may be zeroed out to attenuate the corruption signal. And, since a discrete cultural object (e.g., first cultural object) is not typically distinguishable in the cepstrum, the method may also include the step of modifying (120) in the spatial quefrency domain the cepstral coefficients corresponding to the first cultural object to enhance or boost the first cultural object signal by applying a gain greater than unity before the step of applying (132) a two-dimensional Fourier transform (which will be described in more detail hereinbelow). As such, the method may further include the step of displaying (124) a representation corresponding to the first cultural object signal in the spatial quefrency domain to detect and/or classify the first cultural object. It should be noted that in the cepstrum, a cultural structure, such as the first cultural object, would be typically located off-center, in one of the quadrants of the cepstrum.

Referring to Fig. 3, for purposes of returning the first image data back to the pixel domain for viewing by a user, the method further includes the step of applying (132) a two-dimensional Fourier transform to transform at least the first cepstral coefficient corresponding to at least a portion of the cultural object signal in the spatial quefrency domain to a complex logarithm of the spatial frequency of at least the portion of the first cultural object signal. In this regard, the applying (132) step reverses the applying (118) inverse Fourier transform step described hereinabove. The method further includes the step of applying (134) an inverse complex logarithm (e.g., a complex exponential function) to the complex logarithm of the spatial frequency of at least a portion of the cultural object signal, the output of which is a spatial frequency of at least the portion of the cultural object signal in the spatial frequency domain. In this regard, the applying (134) inverse complex logarithm step reverses the applying (116) complex logarithm step described hereinabove. In order to return the image data to the pixel domain for viewing by a viewer, the method also includes applying (136) an inverse Fourier transform to transform the spatial frequency of at least the portion of the cultural object signal into at least the portion of the cultural object signal in the pixel domain. This applying step (136) effectively reverses the step of applying (114) the Fourier transform described hereinabove. Thereafter, the method comprises the step of displaying (142) at least the portion of the cultural object in the pixel domain for detection and/or classification of at least the cultural object.

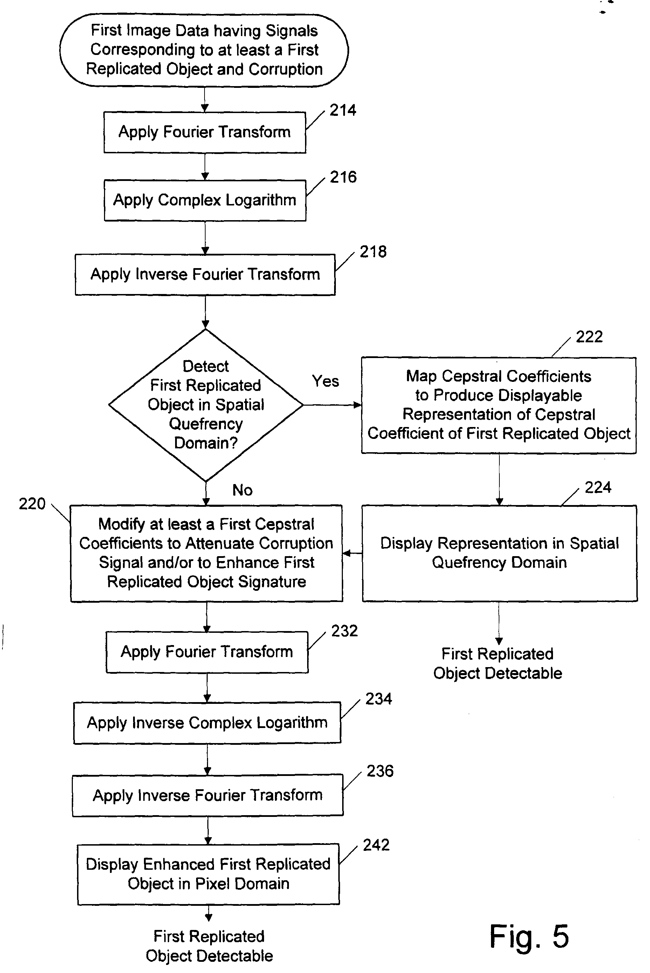

In another embodiment, illustrated in Fig. 5, the method of the present invention seeks to process image data, real or complex, where the image data has a large amount of stochastic corruption which prevents the signals of interest, namely, signals which are comprised of a replicated signature from a replicated object, from being readily evident to users or viewers of the image data. Referring to Fig. 5, initially, in instances where it is believed that the first image data "a(x, y)" from an optical, infrared or synthetic aperture radar imaging system includes a replicated object (e.g., an array of mines), such that:

$$a(x, y) = d(x, y) ** c(x, y) + w(x, y), \text{ where } x, y = 0, 1, \ldots, N-1$$

where "c(x, y)" corresponds to a corruption, "w(x, y)" corresponds to noise (e.g., system noise), and "d(x, y)" corresponds to the true image:

$$d(x, y) = \Sigma \gamma_k\, r(x-x_k, y-y_k) + g(x, y),$$ where "$\gamma$" is a scale factor, "k" corresponds to the number of repeating signals, "$r(x-x_k, y-y_k)$" corresponds to a replicated object and "g(x, y)" corresponds to a cultural structure or object. In this regard, the first image data "a(x, y)" includes signals corresponding to corruption "c(x, y)" and a replicated object signature "$r(x-x_k, y-y_k)$" corresponding to a replicated object. For purposes of processing the image data "a(x, y)" from the pixel domain into the spatial quefrency domain to produce separable cepstral coefficients corresponding to at least a portion of the replicated object signature, an amplification factor and the corruption signal in the spatial quefrency domain, the method includes the steps of applying (214) a two-dimensional Fourier transform to the first image data "a(x, y)" in the pixel domain to transform the first image data into at least a first replicated term "A(u, v)" comprising a product of an amplification factor "H(u, v)" and the spatial frequencies of at least a portion of the first replicated object signature "R(u, v)" and the corruption signal "C(u, v)":

$$F[a + j0] \rightarrow A,$$ wherein "A", per the two-dimensional Fourier convolution and shift theorems:

$$A(u, v) = D(u, v)\, C(u, v) + W(u, v),$$

where $D(u, v) = R(u, v)\, H(u, v) + G(u, v)$, and

$H(u, v) = \Sigma \gamma_k \exp\{-2\pi j\,[ux_k + vy_k]/K\}$, whereby "H(u, v)" corresponds to an amplification factor, "R(u, v)" corresponds to the replicated object signature, "G(u, v)" corresponds to the cultural object, "C(u, v)" corresponds to the corruption signal, and "W(u, v)" corresponds to system noise in the spatial frequency domain. The index "k" runs from zero (0) to K.

Since the image data in the spatial frequency domain "A(u, v)" is represented as a sum, the step of processing of the image data from the pixel domain into the spatial quefrency domain further includes the step of filtering (e.g., linearly filtering) the image data in the spatial frequency domain to pass only the replicated term (e.g., if the image data may contain signals corresponding to a discrete cultural object), whereby,

$$\text{First Replicated Term "A(u, v)"} \cong R(u, v)\, H(u, v)\, C(u, v).$$

The step of processing the image data from the pixel domain into the spatial quefrency domain further includes the step of applying (216) in the spatial frequency domain a complex logarithm to the replicated term, the output of which is a replicated sum "CLOG (A(u, v))" comprising the complex logarithm of the amplification factor "H(u, v)" plus the complex logarithms of the spatial frequencies of the replicated object signature "R(u, v)" and the corruption signal "C(u, v)":

$$\text{First Replicated Sum "CLOG A(u, v)"} = CLOG(R(u, v)\, H(u, v)\, C(u, v))$$
$$\cong CLOG\,(R(u, v)) + CLOG\,(H(u, v)) + CLOG\,(C(u, v)) + 2\pi j\, N(R(u, v), H(u, v), C(u, v)),$$

where "CLOG" is a Complex Logarithm, and N( ) is 0, ±1.

The object of the step of applying (216) the complex logarithm to the replicated term is to take advantage of the property that the logarithm of a product is equal to the sum of the logarithm of the individual factors of the product plus a phase term $(2\pi j) \times$ (integer), where $j^2 = -1$ and the integer is ±1 or 0. The step of processing the image data from the pixel domain into the spatial quefrency domain further includes the step of applying (218) an inverse two-dimensional Fourier transform to the replicated sum "CLOG (A(u, v)":

$$F^{-1}[\text{First Replicated Sum "CLOG (A(u, v)"}] =$$
$$F^{-1}[CLOG\,(R(u, v)) + CLOG\,(H(u, v)) + CLOG\,(C(u, v)) + 2\pi j\, N(R(u, v), H(u, v), C(u, v))]$$
$$= F^{-1}[CLOG\,(R(u, v))] + F^{-1}[CLOG\,(H(u, v))] + F^{-1}[CLOG\,(C(u, v))]$$

to transform the replicated sum into cepstral coefficients which correspond to at least the portion of the replicated object signature, the amplification factor and the corruption signal in the spatial quefrency domain. In this domain, the inverse Fourier transformed image data corresponding to the complex log of the stochastic corruption signal "$F^{-1}$[CLOG (C(u, v))]" can be effectively zeroed out to reject the stochastic corruption of the input image data while retaining the inverse Fourier transformed image data corresponding to the complex log of the replicated object signature and the amplification factor "$F^{-1}$[CLOG (R(u, v))] + $F^{-1}$[CLOG (H(u, v))]." In this regard, the method further comprises the step of processing in the spatial quefrency domain at least a first cepstral coefficients corresponding to the corruption signal to attenuate at least a portion of the corruption signal, such that at least the portion of the first replicated object signature remains. In one embodiment, the step of processing a first cepstral coefficient corresponding to the corruption signal includes the step of modifying (220) at least the first cepstral coefficient corresponding to the corruption signal in the cepstral quefrency domain to attenuate at least the portion of the corruption signal.

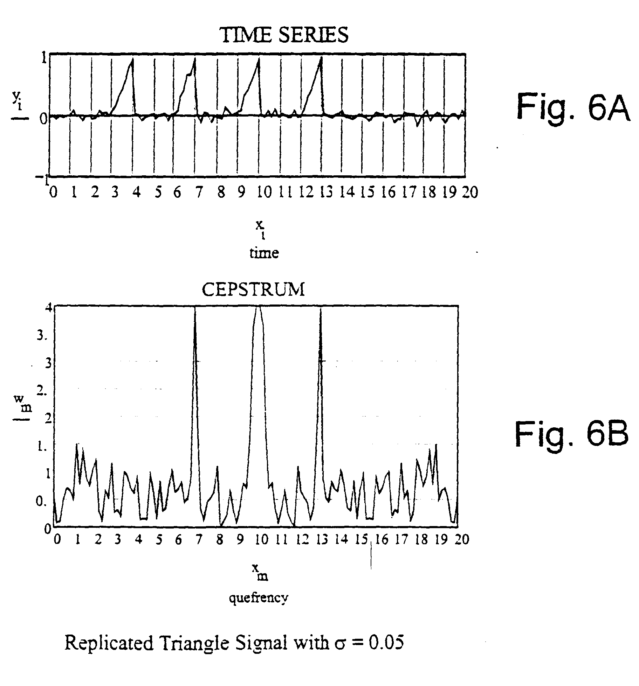

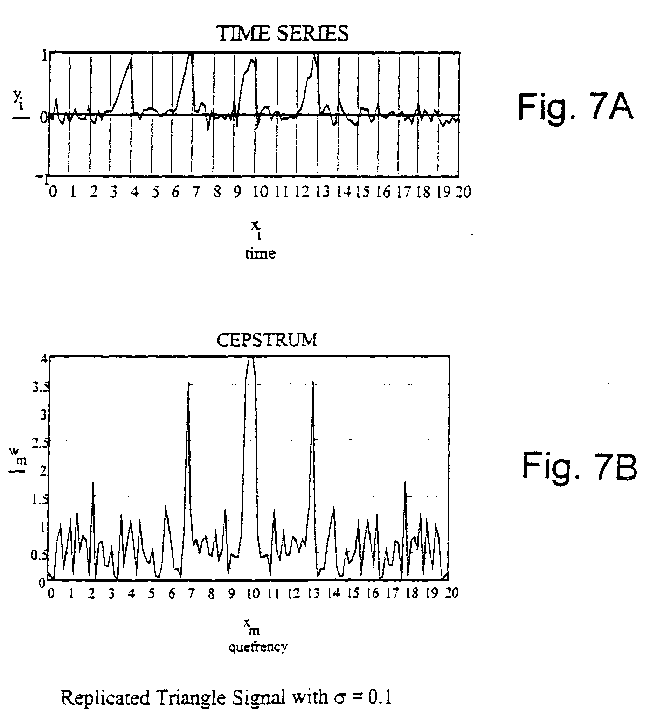

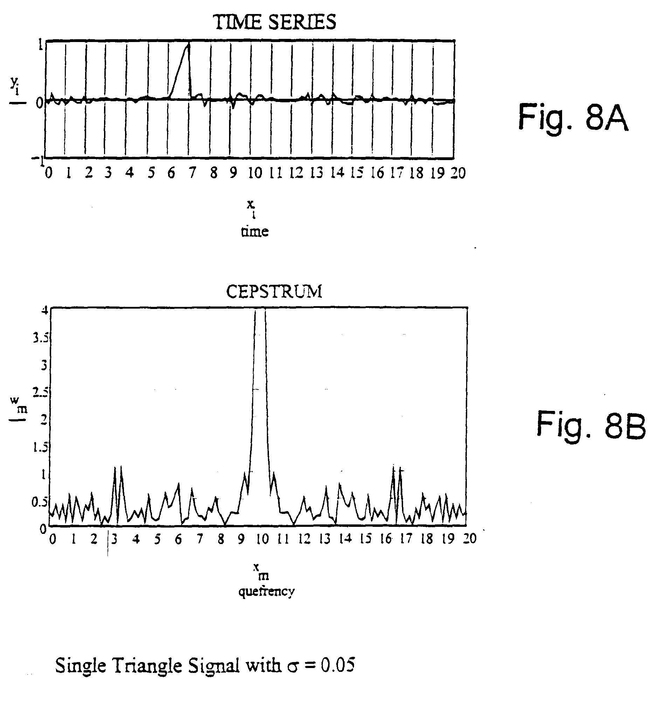

More specifically, if it is desirable to attenuate at least a portion of the corruption signal and/or enhance the replicated object signature in the spatial quefrency domain, after the step of applying (218) the inverse two-dimensional Fourier transform to the replicated sum, the method includes the step of modifying (220) the cepstral coefficients corresponding to the corruption signal and/or the replicated object signature and the amplification factor in the spatial quefrency domain. By way of example, the cepstral coefficients can be shown one-dimensionally (e.g., akin to a time series domain to illustrate the behavior of the replicated object signature which manifests itself as spikes in this domain) two-dimensionally (e.g., in the cepstrum domain), as illustrated in Figs. 6A-6B, 7A-7B, and 8A-8B. Referring to Fig. 6A, cepstral coefficients of interest (e.g., corresponding to the replicated object signature, corruptions signal) may be identified in a simple time series domain. As seen in Fig. 6A, the image data corresponds to a triangle-shaped signal replicated four times. Fig. 6B illustrates the cepstrum thereof, with Gaussian white noise added having a mean of zero and a standard deviation of 0.05. The spacing between the triangle signal models is three units of time. As such, the spikes appearing in the cepstrum at values of seven (7) and thirteen (13) are three frequency units to either side of the center of the cepstrum, which occurs at the value ten (10). In this regard, the method may include the step of thresholding the cepstrum to find the spikes. For example, a filter to enhance the replicated object signal may be required to at least modify (220) or zero out the cepstral coefficients corresponding to the main lobe in the center of the cepstrum (e.g., at the value of 10), and optionally modifying (220) at least the cepstral coefficients corresponding to at least the replicated object signature and amplification factor by applying a gain factor greater than unity to the spiked areas around the quefrency values of seven (7) and thirteen (13) to enhance the first replicated object signature in the spatial quefrency domain. Referring to Figs. 7A-7B, the standard deviation of the Gaussian noise is now 0.1, such that the amplitude signal-to-noise ratio is reduced by half relative to the signal depicted in Fig. 6A-6B. However, the spikes in the cepstrum are reduced only from a peak of 4.0 in the signal depicted in Figs. 6A-6B, to a peak of 3.5 in the image data illustrated in Figs. 7A-7B, which is a reduction of 0.875, which is greater than 0.5. Since the noise level remains essentially at a value of one (1), the cepstrum does not suffer nearly so much loss as the loss in signal-to-noise ratio in the time series domain. The step of modifying (220) the cepstral coefficients corresponding to the first replicated object signature may comprise applying a gain factor greater than unity around the quefrency values of seven (7) and thirteen (13) to enhance the first replicated object signature prior to returning the image data to the pixel domain and/or the cepstral coefficients corresponding to the corruption to attenuate the corruption signal by zeroing out the cepstral coefficients corresponding to the main lobe (e.g., around the value of ten (10)) in the cepstrum. In particular, a gain factor of 1/0.875 would result in triangles in the time domain which are on the order of the triangles which have half the noise level. The method may include the step of thresholding in the cepstrum to find the spikes. For comparison purposes, Figs. 8A-8B illustrate plots of a single triangle signal and the associated cepstrum. It should be noted that no dominant spikes appear in this cepstrum. This example is typical in that a very robust algorithm results from the use of cepstral techniques. As such, the probability of detection is high with a low probability of false alarm.

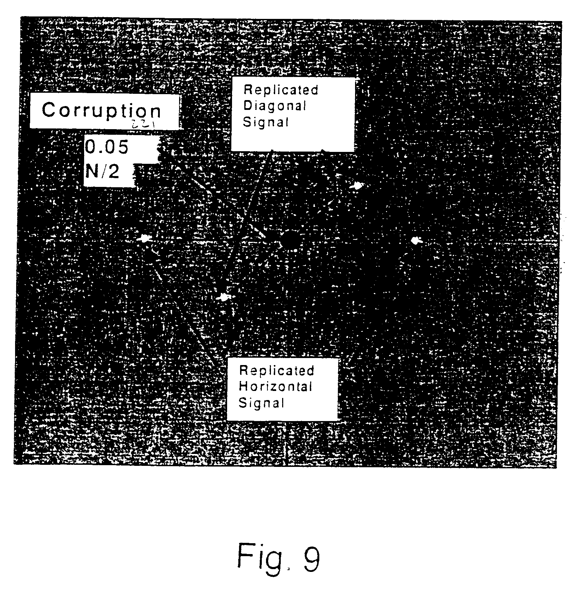

Referring back to Fig. 5, if desired, an embodiment of the method of the present invention allows detection of the replicated object in the spatial quefrency domain. In this regard, this embodiment of the method of the present invention includes the step of mapping (222) at least a portion of the cepstral coefficients corresponding to at least the replicated object signature to produce a displayable representation of at least the cepstral coefficients corresponding to the replicated object signature, and displaying (224) at least the displayable representation of at least the replicated object signature. Specifically, and referring to Fig. 9, for imagery with a replicated object signature, smaller bright spots may appear in the mapped cepstrum, where the spacing between the center of the two dimensional cepstrum and the bright spots corresponds to the spacing of the replicated object signature in the pixel domain. Regardless of whether the corruption signal or energy is convolved or added in the pixel domain, the corresponding energy in the spatial quefrency domain is concentrated in the center of the two dimensional cepstrum with the replicated object signature in the image being somewhat removed therefrom as shown in Fig. 9 for an "N x N" input pixel image. The black circle (221) containing the corruption may be zeroed out and any replicated object signature can be boosted by the application of a gain greater than unity to the appropriate regions before the step of applying (232) the Fourier transform (which is described in more detail hereinbelow). In the example illustrated in Fig. 9, the behavior of a signal replicated in the horizontal direction is depicted. Replication along other lines in the pixel domain would appear as bright spots along a line in that same direction in the cepstrum as indicated in Fig. 9 for a signal along the diagonal.

This embodiment of the method of the present invention further includes the step of processing the cepstral coefficients corresponding at least to the portion of the enhanced replicated object signature and the amplification factor to obtain at least a portion of the enhanced replicated object signature in the pixel domain. In particular, and referring to back to Fig. 5, the step of processing the cepstral coefficients to obtain the enhanced replicated object signature in the pixel domain includes the steps of applying (232) a two-dimensional Fourier transform to transform the cepstral coefficients corresponding to at least the portion of the enhanced replicated object signature and the amplification factor in the spatial quefrency domain to a complex logarithm of the spatial frequency of at least the portion of the enhanced replicated object signature and a complex logarithm of the amplification factor. This step is applied to reverse the step of applying (218) the inverse Fourier transform described hereinabove. The step of processing the cepstral coefficients corresponding to at least the portion of the enhanced first replicated object signature and the amplification factor further includes the step of applying (234) an inverse complex logarithm to the complex logarithm of the spatial frequency of at least the portion of the enhanced replicated object signature and the amplification factor, the output of which is a spatial frequency of at least the portion of the enhanced replicated object signature and the amplification factor in the spatial frequency domain. This step functions to reverse the step of applying (216) the complex logarithm described hereinabove. Finally, the processing step includes applying (236) a two-dimensional inverse Fourier transform to transform at least the spatial frequency of at least a portion of the enhanced replicated object signature and the amplification factor into at least the portion of the enhanced replicated object signature in the pixel domain. This inverse Fourier transform step is applied to reverse the step of applying (214) the Fourier transform described hereinabove. Thereafter, the enhanced replicated object may be displayed (242) in the pixel domain for detection and/or classification of at least a portion of the enhanced replicated object.

As noted herein, the cepstral methodology is particularly useful for processing SAR image data to detect replicated objects, such as mine arrays, the signatures of which may be imbedded in the real SAR image clutter. Performance of the cepstral process for SAR image mine array detection may be measured by a quantity called the array to background ratio ("ABR"), which is given below:

$$\text{Mine to Background Ratio ("MBR")} = N/D,$$

where $N = \max \{\text{mine pixel}\} - \text{average clutter}$, $D = \text{average clutter}$ ;

$MBR < 0 \Rightarrow$ Set MBR = 1 ;

Given an array of mines $M_j$, j=1,2, . . .,J, the ABR is the geometric mean of the $MBR_j$'s, which is chosen due to human factors considerations. Thus, where "$\Pi$" indicates a product and "$\Sigma$" indicates a sum:

$$ABR = (\Pi_{j=1,J} MBR_j)^{1/J} \Rightarrow dB[ABR] = 20 \log ((\Pi_{j=1,J} MBR_j)^{1/J})$$

$$= (20/J) \log (\Pi_{j=1,J} MBR_j)$$

$$= (1/J) \Sigma_{j=1,J} 20 \log (MBR_j)$$

$$= (1/J) \Sigma_{j=1,J} dB[MBR_j]$$

Also: $\ln (ABR) = (1/J) \ln (\Pi_{j=1,J} MBR_j) = (1/J) \Sigma_{j=1,J} \ln (MBR_j)$ :

Normal by CLT $\Rightarrow$ ABR: Lognormal.

Using the above-described cepstral filter methodology for a SAR image mine array imbedded in real SAR image clutter at -0.4 dB ABR resulted in a 6.9 dB ABR increase. The cepstral filter methodology amplifies array structures (e.g., replicated objects, such as mine arrays) by virtue of the Fourier Translation Theorem for two dimensions. The above-referenced functions "R(u,v)" and "H(u,v)" reflect the action of the Fourier Translation Theorem for two dimensions as described hereinabove, which shows how the replicated structure can be amplified using the cepstral methodology described herein.

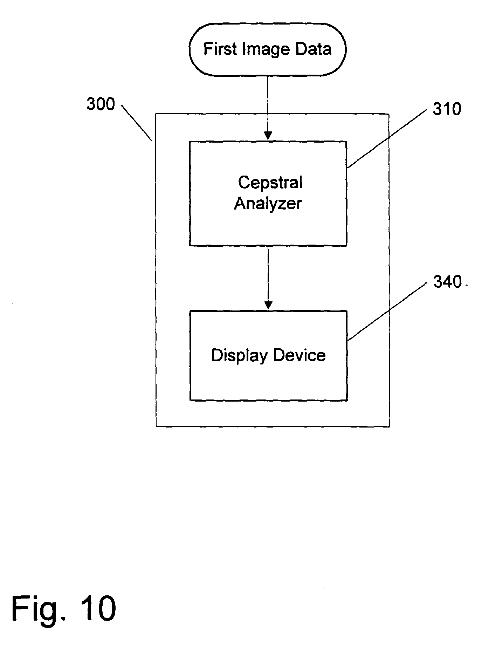

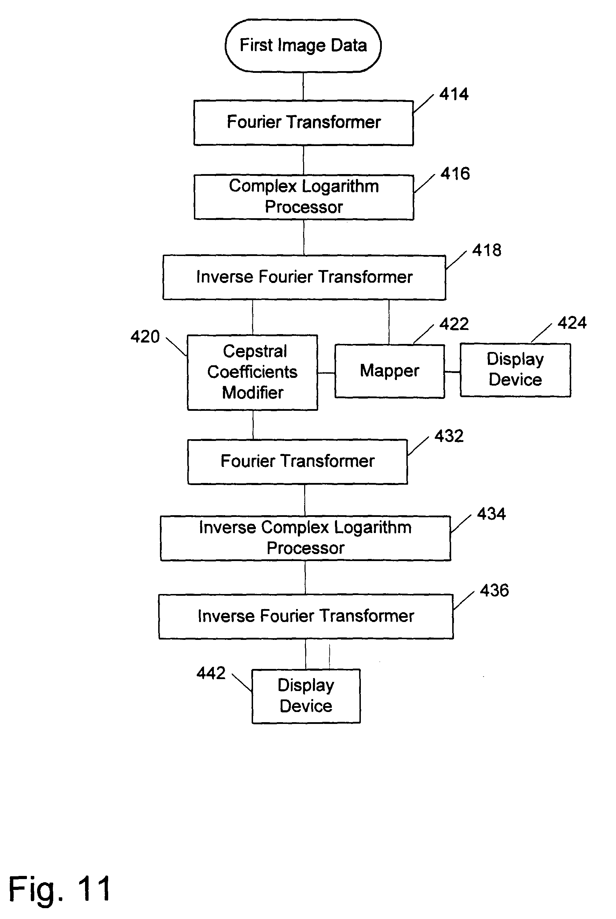

In another embodiment of the present invention, a system (300) for detecting and/or classifying at least one of a first, discrete cultural object and a first replicated object is disclosed. As illustrated in Fig. 10, one embodiment of the system (300) includes a means (310) for performing a cepstral analysis on the image data to attenuate at least a portion of the corruption signal in the image data and/or enhance at least one of a discrete cultural object signal and a replicated object signature in the image data which corresponds to a discrete cultural object and a replicated object, respectively, and a means (340) for displaying an output of the means for performing in the pixel domain and/or a spatial frequency domain to detect and/or classify the discrete cultural object and/or the replicated object. More specifically, and referring to Fig. 11, in one embodiment, the means for performing a cepstral analysis includes a two-dimensional Fourier transformer (414) for transforming the image data in the pixel domain to a discrete term, which is the product of the spatial frequencies of the cultural object signal and the corruption signal in the spatial frequency domain, and/or a replicated term, which is the product of an amplification factor and the spatial frequencies of the replicated object signature and the corruption signal. For purposes of analyzing the image data which may contain both a cultural object and a replicated object to detect a cultural object or a replicated object, the means for performing a cepstral analysis further includes first and/or second linear filters (not shown), the first filter operating to pass only the discrete term relating to the discrete cultural object, and the second liner filter operating to pass only the replicated term corresponding to the replicated object. As illustrated in Fig. 11, the means for performing the cepstral analysis further includes a complex logarithm processor (416) for applying a complex logarithm to the discrete term and/or the replicated term to obtain a discrete sum and/or a replicated sum, respectively, the discrete sum including a sum of the complex logarithms of the spatial frequencies of the cultural object and corruption signals, and the replicated sum including a sum of the complex logarithms of the amplification factor and the spatial frequencies of the replicated object signature and the corruption signal. The object of taking the complex logarithm is to take advantage of the property that the logarithm of a product is equal to the sum of the logarithms of the individual factors of the product, plus a phase term. Each factor of interest, either for retention (e.g., cultural object, replicated object) or rejection (e.g., corruption) is thus represented as a term in a sum. As such, the means for performing a cepstral analysis on the image data further includes an inverse two-dimensional Fourier transformer (418) for transforming the discrete sum and/or the replicated sum into cepstral coefficients corresponding to the cultural object signal and the corruption signal and/or the replicated object signature, the amplification factor and the corruption signal in the spatial quefrency domain.

In one embodiment, where it is desirable and/or possible to detect the cultural object and/or the replicated object in the spatial quefrency domain, the system includes a means (422) for mapping the cepstral coefficients corresponding to the cultural object and/or the replicated object as displayable representations in the spatial quefrency domain to thereby detect the cultural object and/or the replicated object. The system further includes a display device (424) for displaying such representations to detect the cultural object and/or the replicated object. In instances where the image data contains corruption signals, the means for performing the cepstral analysis further includes a cepstral coefficients modifier (420) for attenuating at least a portion of the corruption signal in the spatial quefrency domain, such that at least portions of the cepstral coefficients corresponding to the cultural object and/or the replicated objects remain in the spatial quefrency domain. In the spatial quefrency domain, cepstral coefficients corresponding to the cultural object signal and/or the replicated object signature may also be modified by the cepstral coefficients modifier (420) to accentuate the cultural object signal and/or the replicated object signature by applying a gain factor greater than unity to the appropriate cepstral coefficients.

For purposes of transforming the image data back to the pixel domain, means for performing the cepstral analysis further includes a two-dimensional Fourier transformer (432) for transforming the cepstral coefficients corresponding to the cultural object signal and/or the replicated object signature and the first amplification factor in the spatial quefrency domain to a complex logarithm of the spatial frequencies of at least a portion of cultural object signal and/or the replicated object signature and the amplification factor. In order to reverse the complex logarithm process described hereinabove, the means for performing a cepstral analysis further includes an inverse complex logarithm processor (434), the output of which includes the spatial frequency of at least a portion of the cultural object signal and/or a portion of the replicated object signature and the amplification factor. And, in order to reverse the inverse Fourier transformer described hereinabove, the means for performing a cepstral analysis includes an inverse Fourier transformer (436) to transform the spatial frequency of at least the portion of the cultural object signal and/or the replicated object signature and the amplification factor into the cultural object signal and the replicated object signature in the pixel domain. Thereafter, the cultural object and/or the replicated object are visually displayable via the display device (442) for detection and/or classification by a human operator/viewer.

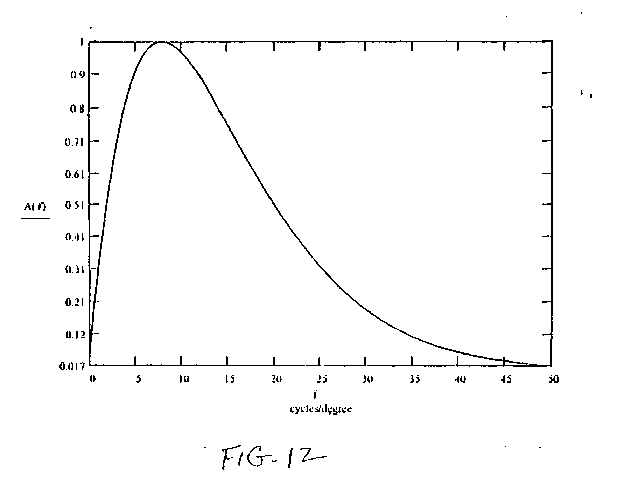

Figs. 12-16 illustrate the various features and characteristics of another embodiment of the method and system of the present invention. Generally, this embodiment of the method and system of the present invention seeks to enhance the structure of an image. More specifically, the method and system seek to accentuate cultural or replicated objects (e.g., non-stochastic feature(s)) relative to corruption or clutter (e.g. stochastic effects) in a variety of digital imagery types, such that certain aspects or features (e.g., non-stochastic features) in the enhanced or accentuated image are more noticeable to the human eye. In this regard the method and system are especially useful for improving the capability of a human observer to detect and/or identify one or more cultural objects or a replicated object (e.g., mine array) for various types of imagery, including optical, infrared and synthetic aperture radar imagery. As such, an embodiment of the present invention seeks to accentuate or enhance the structure of the image so that non-stochastic features corresponding to one or more objects are more noticeable to the human eye relative to the stochastic effects (e.g., graininess or speckle due to clutter or corruption signal). More specifically, in order to enhance the noticeability of non-stochastic features relative to stochastic effects in an image, an embodiment of the method and system of the present invention function to increase the contrast of the non-stochastic feature signal relative to the stochastic effects signature while reducing the response of the human eye to the stochastic effects by altering or modifying the spatial frequency characteristics of the stochastic effects.

As noted by J.L. Mannos and D.J. Sakrison in "The Effect of a Visual Fidelity Criterion on the Encoding of Images," IEEE Transactions on Information Theory, Vol. IT-20, July 1974, which is hereby incorporated by reference in its entirety, the response of the human eye (e.g., eye sensitivity) varies with frequency of the imagery, even where the average intensity is the same. In particular, the human eye responds in a dramatically different fashion to stochastic effects of the same (or even greater) average intensity, but different frequencies. Mannos and Sakrison's Human Eye Frequency Response curve, illustrated in Fig. 12, is defined by the function "A(f)", and determined by the parameters "K", "a", "b", and "c":

$$A(f) = K (a + bf) \exp [-(bf)^c],$$

where K = 2.6507, a = 0.0192, b = 0.114 and c = 1.1.

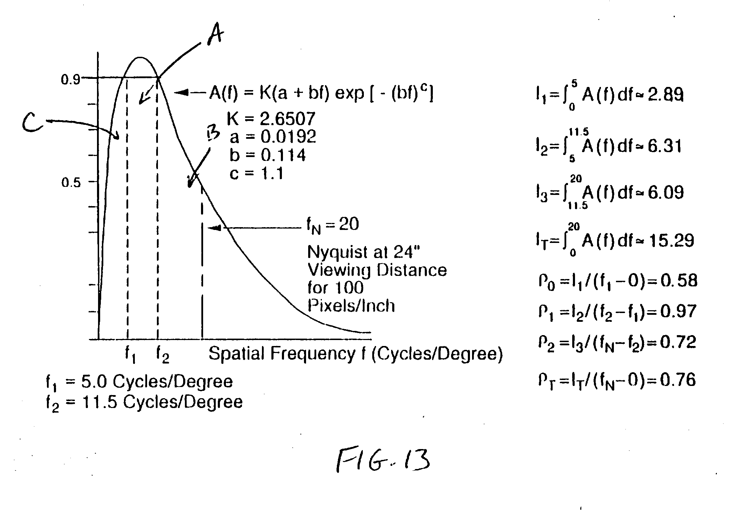

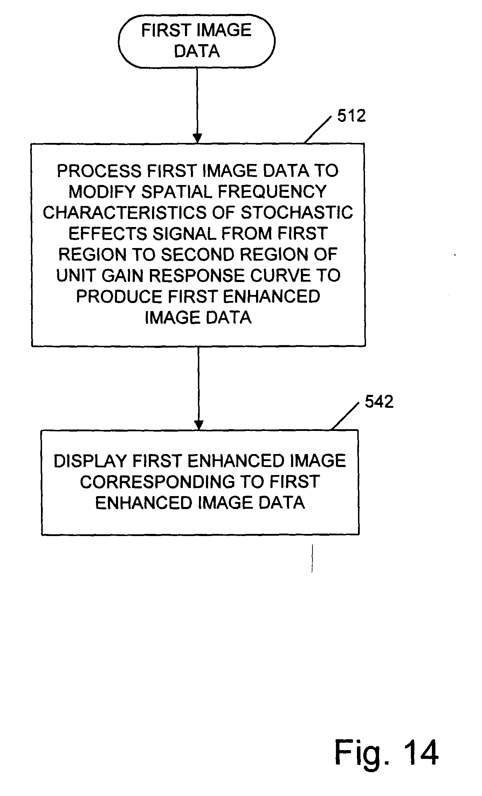

Referring to applicant's unit gain response curve illustrated in Fig. 13, an embodiment of the present invention is based in part upon the recognition that the human eye responds much more strongly to structures having a spatial frequency in the lower frequency region (e.g, in region "A") of the curve than in the higher frequency region (e.g., in region "B") of the curve. In addition, in some instances, the human eye will respond more strongly to structures hiving a spatial frequency in the higher frequency region (e.g., in region "A") of the curve than in the lower frequency region (e.g., in region "C") of the curve. As such, embodiments of the present invention seek to alter the spatial frequency of the stochastic effects of input image data, such that the spatial frequency of the stochastic effects of the input image data are decreased or increased (e.g., into regions "C" or "B", respectively, of the unit gain response curve), while the spatial frequency of the non-stochastic effects remain relatively unaltered (e.g. remain in region "A" of the unit gain response curve), the of which is generally illustrated in Fig. 14. As a result, the stochastic effects in the resulting accentuated/enhanced image are not as noticeable to the human eye as the non-stochastic features since an embodiment of the method and system of the present invention functions to enhance the structure of the input image.

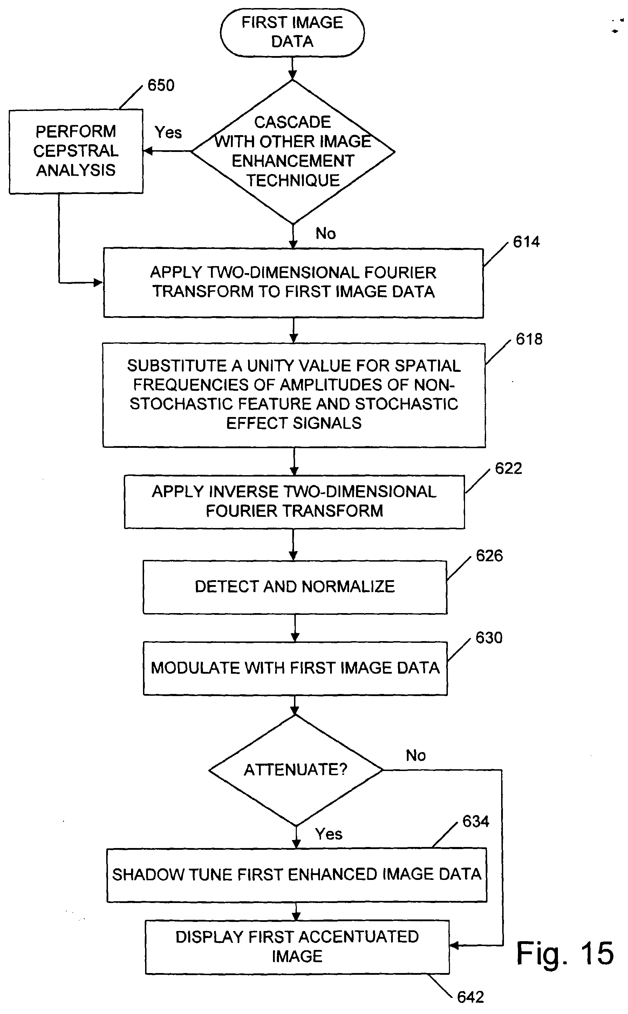

Generally, and referring to Fig. 14, in order to enhance first image data from one of an optical, infrared and synthetic aperture radar imaging system, the first image data, which is digital, and in some instatnces, analog in nature, including signals corresponding to one or more non-stochastic features and stochastic effects, an embodiment of the method of the present invention includes the steps of processing (512) the first image data to produce first enhanced image data by altering and/or modifying the spatial frequency of the stochastic effects signals and by increasing the contrast of the non-stochastic feature signal relative to the stochastic effects signals, and displaying (542) in the pixel domain a first enhanced/accentuated image corresponding to the first enhanced image data. More specifically, in one embodiment, illustrated in Fig. 15, the step of processing the first image data initially includes the step of applying (614) a two-dimensional Fourier transform (e.g., discrete or fast Fourier transform, "F") to transform the first input image data "d" in the pixel domain into amplitude (e.g., modulus, "M") and phase (e.g., argument, "$\alpha$") data in the spatial frequency domain:

$$F[d] \rightarrow a + jb$$
$$\rightarrow \alpha,$$

where $M^2 = a^2 + b^2$, $\alpha = $ Arctan $(b/a)$, and $j^2 = -1$.

Such phase data includes a spatial frequency of the phase of the non-stochastic feature signature and may further include a spatial frequency of the phase of the stochastic effects signal. Similarly, the amplitude data includes a spatial frequency of the amplitude of the non-stochastic feature signature and may further include a spatial frequency of the amplitude of the stochastic feature signal. The step of processing the first image data to accentuate the non-stochastic features relative to the stochastic effects in the first image data further includes the steps of substituting (618) a unity value (e.g., Pseudo Modulus-Constant, Butterworth Surface, etc.) for the spatial frequencies of the amplitudes of the non-stochastic feature signature and the stochastic effects signal, and applying (622) a two-dimensional inverse Fourier transform to transform the spatial frequencies of the phases of the non-stochastic feature signature and the stochastic effects signal, along with the unity values of the spatial frequencies of the amplitudes of the non-stochastic feature signature and the stochastic effects signal into first modified image data, "u + jv," including at least the phase of the non-stochastic feature signature and the phase of the stochastic effects signal.

In order to produce data "n" which is, like the first input image data "d", two-dimensional in the original pixel domain, the processing step further includes the step of transforming the first modified image data back into the pixel domain and modifying in the pixel domain the first modified image data by a normalization process. As a result, white noise in the image data will have a constant amplitude in the spatial frequency domain (e.g., unity), such that when the amplitude is forced to be constant in the spatial frequency domain, single spikes corresponding to non-stochastic feature signals are brought out. In this regard, the steps of transforming and modifying the first modified image data includes the steps of detecting and normalizing (626) the modified image data "u +jv" to produce image data "n", where "r" is the normalized first modified image data and the maximum value of "n" is unity by virtue of the normalization:

$$R : r = \| u + jv \|; \text{ and}$$

$$N : n = r / \max R.$$

By normalizing the data, brighter objects of interest (e.g., non-stochastic features or structures) in the original first image data "d" will have corresponding values in the detected and normalized image data "n" which are closer to one (1), and clutter (e.g., stochastic effects) will not only have values which are closer to zero (0), but the spatial frequency characteristics of the stochastic effects signal are altered so that the stochastic effects are not as noticeable to the human eye.

In this embodiment, illustrated in Fig. 15, the processing step further includes the step of modulating (630) the original, first image data "d" with the detected and normalized first image data "n" by a pixel by pixel multiplication to produce the first enhanced/accentuated modulated image "c" which is digital in nature and corresponds to the first enhanced image data:

$$d \otimes n \rightarrow c.$$

As a result of such modulation, the first enhanced modulated image data "c" has the same mean and standard deviation as the original input image data, "d", and hence the same general brightness and contrast. Thereafter, the first enhanced modulated image data "c" is processable to display (642) the enhanced or accentuated modulated digital image in at least one of a hard copy (e.g., on paper) and a soft copy (e.g., on a video display terminal screen) form for exploitation by a human viewer.

If desired, the enhanced image may be further accentuated. In this regard, for purposes of further enhancing the first enhanced/accentuated modulated image data, the method may further include the step of shadow tuning (634) the first enhanced modulated image data, "c", illustrated in Fig. 15. In one embodiment, the step of shadow tuning (634) initially comprises the step of computing the digital image data "z":

$$Z : z = \{s_d (c-E[c])/s_c\} + E[d],$$

where $s_d^2$ = Var [d] , the variance of "d", and $s_c^2$ = Var [c] , the variance of "c", and "E[d]" is the mean of "d", and "E[c]" is the mean of "c", with the notation "E[ ]" and "Var [ ]" having the standard definition in signal processing, statistical literature, namely, the former is the Expected Value operator which produces the mean or average of the random variate enclosed in the brackets, and the latter is the Variance operator which produces the variance of the random variate enclosed in the brackets.

Of note, the mean, "E[z]", and variance, "V[z]", of the digital image data "z" is equal to the mean, "E[d]" and variance "V[d]" of the original first image data, "d". Finally, the step of shadow tuning (634) includes computing the output digital image data, "Γ":

$$\Gamma : \gamma = z - \min Z (\mu - 1),$$

wherein $0 \leq \mu \leq 1$.

If "$\mu$" is set to be equal to one (1), the second term of the definition of "$\gamma$" is zero (0), so that the computed output digital image data, "$\gamma$" is equal to the digital image data, "z". On the other hand, at the opposite extreme of shadow tuning, if "$\mu$" is set to be equal to zero (0), then the second term of the definition of "$\gamma$" is "min Z", so that the shadows, which have low pixel values to begin with, will be reduced even more, making the shadows darker. Such shadow tuning is particularly useful for increasing the contrast of certain non-stochastic features (e.g., a mine array) relative to shadows in synthetic aperture radar imagery since the shadow tuning brings out (e.g., blackens) the shadows, the shadows corresponding to areas of the radar energy illuminated target in which the radar energy return was weak or nonexistent (e.g., for obscured non-stochastic features).

In instances where the enhanced image data is not displayable in the pixel domain, the method further comprises the step of applying a remap transformation to the enhanced image data appropriate to the display device which will be used to view the enhanced image for exploitation purposes. In instances where the original input image data (e.g., first image data) is not displayable in the pixel domain, a remap transformation may be applied to the input image data as well.

In other instances, it may also be desirable to cascade the above-described methodology with other image enhancement techniques to provide for a further enhanced image. For example, in one embodiment, illustrated in Fig.

15, the method includes the step of performing (650) a cepstral analysis on the image data, substantially as described hereinabove, to attenuate the stochastic effects signature relative to the non-stochastic feature signal. Alternatively, other conventional image enhancement techniques, such as histogram modification or moment matching, among others, are cascadable with the methodology of embodiments of the present invention.

For purposes of predicting the effectiveness of the embodiments of the present invention, the following analysis can be utilized with the Human Eye Frequency Response curve. Referring to Fig. 13, applicant has defined a frequency band between "$f_1$" and "$f_2$", which are frequency values corresponding to the eye sensitivity value of about 0.9 on the Human Eye Frequency Response curve (i.e., a unit gain response curve), since it is common for non-linear detectors which have the function form "A(f)" noted hereinabove to have performance measured in some way by the 0.9 region in the curve. It is in this frequency band (e.g., region "A") that the human eye is most sensitive to stochastic effects, and it is outside of this frequency band (e.g., regions "B" and "C") that the human eye is less sensitive to the stochastic effects. The Nyquist foldover frequency for a typical softcopy viewing situation of the human eye being 24 inches away from a screen which has a line density of 100 pixels/inch is represented as "$f_n$" (e.g., about 20 cycles/degree). Of course, "$f_n$" may be revised for other combinations of distance of the human eye from the screen and/or the pixel density. It should also be noted that it is important for any algorithm to avoid generating frequencies higher than "$f_n$" to avoid folding over stochastic energy at these higher frequencies so that it may introduce more noise which is more noticeable to the human eye. As such, for such softcopy viewing of the human eye being 24 inches away from a screen which has a line density of 100 pixels/inch, the step of processing the image data comprises the step of altering/modifying the spatial frequency characteristics of the stochastic effects of the first image data such that the spatial frequency is increased from between about 5.0 cycles/degree (e.g., $f_1$) and about 11.5 cycles/degree (e.g., $f_2$) to between about 11.5 cycles/degree (e.g., $f_2$) and about 20 cycles/degree (e.g., $f_n$).

In order to determine whether a given digital image "d" has a highly desirable level of stochastic power relative to a given application, so as to be distracting to the human eye for this given application, the following stochastic test statistic may be used. Referring back to Fig. 13, "$I_m$", where "m = 1, 2, 3, and T", may be used to define the response curve density parameters "$\rho_m$", where "m = 0, 1, 2, and T" which are designed to capture the response relative cycle/degree in the various frequency intervals determined by 0, "$f_1$", "$f_2$" and "$f_n$". It should be noted that the curve density "$\rho_1$" is significantly larger than the other "$\rho_m$", where "m = 0, 2, and T", reflecting the nature of the response of the human eye in this band. The test statistic would involve power in the frequency bands of interest as derived from the amplitude of the Fourier transform of an image being examined, possibly, but not necessarily, combined with the response curve density parameters, "$\rho_m$", where "m = 0, 1, 2, and T". However, the exact method of combination would depend upon the application's use of the image.

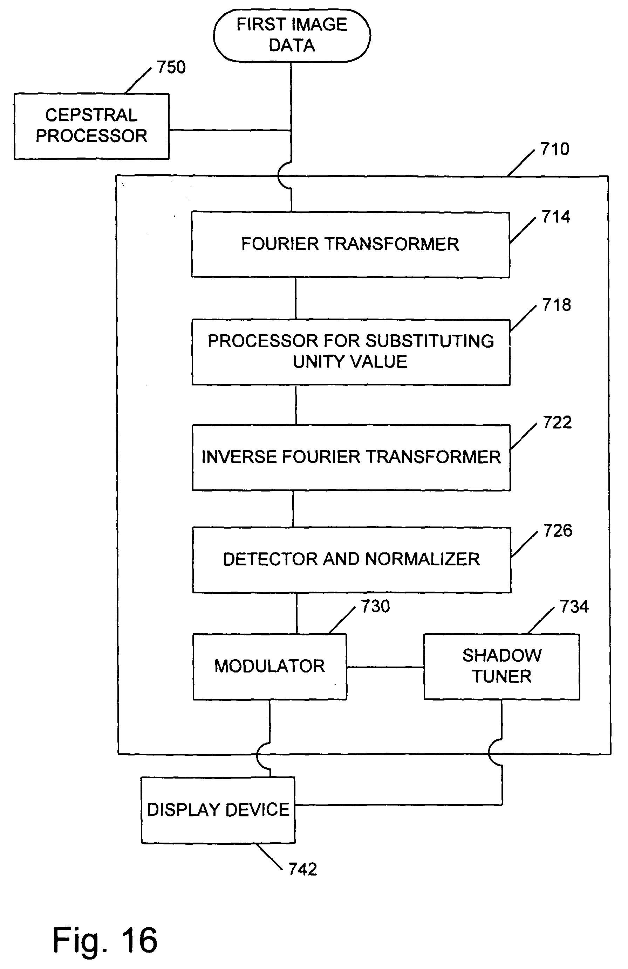

In another embodiment, the present invention seeks to provide a system for accentuating/enhancing the structure of an image from one of an optical, infrared and synthetic aperture radar imaging system. Referring to Fig. 16, in one embodiment, the system 710 includes a processor 712 adapted for processing the first image data to produce first enhanced image data by altering and/or modifying the spatial frequency of the stochastic effects signals (e.g., increasing or decreasing the spatial frequency of the stochastic effects signal) and by increasing the contrast of the non-stochastic feature signal relative to the stochastic effects signals, and a display device 742 for displaying in the pixel domain a first enhanced/accentuated image corresponding to the first enhanced image data. More specifically, the processor 712 includes transformer 714 for applying a two-dimensional Fourier transform (e.g., discrete or fast Fourier transform, "F") to transform the first input image data "d" in the pixel domain into amplitude (e.g., modulus, "M") and phase (e.g., argument, "$\alpha$") data in the spatial frequency domain. Such phase data includes a spatial frequency of the phase of the non-stochastic feature signature and may further include a spatial frequency of the phase of the stochastic effects signal. Similarly, the amplitude data includes a spatial frequency of the amplitude of the non-stochastic feature signature and may further include a spatial frequency of the amplitude of the stochastic feature signal. The processor 710 further includes a processor 718 for substituting a unity value for the spatial frequencies of the amplitudes of the non-stochastic feature signature and the stochastic effects signal, and an inverse transformer 722 capable of applying two-dimensional inverse Fourier transform to transform the spatial frequencies of the phases of the non-stochastic feature signature and the stochastic effects signal, along with the unity values of the spatial frequencies of the amplitudes of the non-stochastic feature signature and the stochastic effects signal into first modified image data, "u + jv," including at least the phase of the non-stochastic feature signature and the phase of the stochastic effects signal. In order to produce data "n" which is, like the first input image data "d", two-dimensional in the original pixel domain, the processor 710 further includes a detector and normalizer 726, which processes the modified image data "u +jv" to produce image data "n", where "r" is the normalized first modified image data and the maximum value of "n" is unity by virtue of the normalization. By normalizing the data, brighter objects of interest (e.g., non-stochastic features or structures) in the original first image data "d" will have corresponding values in the detected and normalized image data "n" which are closer to one (1), and clutter (e.g., stochastic effects) will not only have values which are closer to zero (0), but the spatial frequency characteristics of the stochastic effects signal are altered so tat the stochastic effects are not as noticeable to the human eye.

In this embodiment of the system of the present invention, illustrated in Fig. 16, the processor 710 farther includes a modulator 730 which multiples the original, first image data "d" with the detected and normalized first image data "n" by a pixel by pixel multiplication to produce the first enhanced/accentuated modulated image "c" which is digital in nature and corresponds to the first enhanced image data. As a result of such modulation, the first enhanced modulated image data "c" has the same mean and standard deviation as the original input image data, "d", and hence the same general brightness and contrast. Thereafter, the first enhanced modulated image data "c" is displayable on the display device 742 (e.g., in soft copy form on a video display terminal screen) for exploitation by a human viewer.

For purposes of further enhancing the first enhanced/accentuated modulated image data, the processor 710 also includes a shadow tuner 734 for increasing the contrast of certain non-stochastic features (e.g., a mine array) relative to shadows in synthetic aperture radar imagery since the shadow tuning brings out (e.g., blackens) the shadows, the shadows corresponding to areas of the radar energy illuminated target in which the radar energy return was weak or nonexistent (e.g., for obscured non-stochastic features).

In certain instance, such as for detecting obscured non-stochastic features such as a mine array, the processor 710 may interface or be cascaded with a cepstral processor 750 which is capable of attenuating stochastic effects signal relative to the non-stochastic feature signals in image data, substantially as described hereinabove with respect to other embodiments of the present invention. In other embodiments, a processor (not shown) capable of performing other types of image enhancement (e.g., histogram modification, moment matching) may be utilised instead of the cepstral processor 750.

The foregoing description of embodiments of the present invention has been presented for purposes of illustration and description. Furthermore, the description is not intended to limit the invention to the form disclosed herein. Consequently, variations and modifications commensurate with the above teachings, and the skill or knowledge of the relevant art, are within the scope of the present invention. The embodiments described hereinabove are further intended to explain best modes known for practicing the invention and to enable others skilled in the art to utilize the invention in such, or other, embodiments and with various modifications required by the particular applications or uses of the present invention. It is intended that the appended claims be construed to include alternative embodiments to the extent permitted by the prior art.

## Claims

1. A method for processing at least first image data including at least a first non-stochastic feature signal and stochastic effects signals corresponding to at least a first non-stochastic feature and stochastic effects to accentuate at least the first non-stochastic feature relative to the stochastic effects in the pixel domain, the first image data from at least one of an optical, an infrared and a synthetic aperture radar imaging system, said method comprising the steps of:

   processing at least the first image data to increase a contrast corresponding to at least the first non-stochastic feature signal relative to the stochastic effects signals from a first contrast level to a second contrast level and to alter a spatial frequency corresponding to the stochastic effects signals to produce first enhanced image data; and
   displaying in the pixel domain at least a first enhanced image corresponding to the first enhanced image data.

2. A method, as claimed in Claim 1, wherein said processing step comprises the steps of:

   applying a two-dimensional Fourier transform to the first image data to transform the first image data into first transformed image data in the spatial frequency domain, the first transformed image data having a first amplitude and a first phase;
   processing the first transformed image data to retain the first phase of the first transformed image data and to set the first amplitude of the first transformed image data to unity to produce first modified transformed image data, wherein the spatial frequency corresponding to the stochastic effects signals is altered and the contrast corresponding to at least the first non-stochastic feature signal relative to the stochastic effects signals is increased from the first contrast level to the second contrast level.
   applying an inverse two-dimensional Fourier transform to the first modified transformed image data in the spatial frequency domain to transform the first modified transformed image data into first modified image data;
   detecting the first modified image data to transform the first modified image data into the pixel domain, the first modified image data in the pixel domain having at least an amplitude;
   processing the first modified image data in the pixel domain to normalize the amplitude of the first modified image data in the pixel domain to produce first normalized image data; and
   modulating the first normalized image data with the first image data to produce the first enhanced image data.

**3.** A method, as claimed in Claim 2, wherein said step of processing the first modified image data in the pixel domain comprises the step of:

setting the amplitude of the first modified image data in the pixel domain to between about 0 and about 1.

**4.** A method, as claimed in Claim 2, wherein said modulating step comprises the step of:

combining the first normalized image data and the first image data by a pixel by pixel multiplication to produce the first enhanced image data.

**5.** A method, as claimed in Claim 1, further comprising the step of:

shadow tuning at least the first enhanced image data to accentuate at least the first non-stochastic feature signal relative to the stochastic effects signals.

**6.** A method, as claimed in Claim 1, further comprising, before said processing step, the step of:

performing a cepstral analysis on the first image data to attenuate at least a portion of the stochastic effects signal.

**7.** A method for processing at least first image data including at least a first non-stochastic feature signal and stochastic effects signal corresponding to at least a first non-stochastic feature and stochastic effects to accentuate at least the first non-stochastic feature relative to the stochastic effects in the pixel domain in accordance with a unit gain response curve having first and second regions, wherein spatial frequencies of the first non-stochastic feature signal and the stochastic effects signal of the first image data are within the first region, the first image data from at least one of an optical, an infrared and a synthetic aperture radar imaging system, said method comprising the steps of:

processing at least the first image data to at least alter the spatial frequency of the stochastic effects signal to produce first enhanced image data, wherein the spatial frequency of the stochastic effects signal of the first enhanced image data is in the second region of the unit gain response curve; and
displaying in the pixel domain at least a first enhanced image corresponding to at least the first enhanced image data.

**8.** A method, as claimed in Claim 7, wherein said processing step comprises the step of:

increasing the spatial frequency of the stochastic effects signal from a first spatial frequency level corresponding to the first region of the unit gain response curve to a second spatial frequency level corresponding to the second region of the unit gain response curve.

**9.** A method, as claimed in Claim 7, wherein said processing step comprises the step of:

decreasing the spatial frequency of the stochastic effects signal from a first spatial frequency level corresponding to the first region of the unit gain response curve to a second spatial frequency level corresponding to the second region of the unit gain response curve.

**10.** A method, as claimed in Claim 7, wherein said processing step comprises the steps of:

applying a two-dimensional Fourier transform to the first image data to transform the first image data into first transformed image data in the spatial frequency domain, the first transformed image data having a first amplitude and a first phase;
processing the first transformed image data to retain the first phase of the first transformed image data and to set the first amplitude of the first transformed image data to unity to produce first modified transformed image data, wherein the spatial frequency corresponding to the stochastic effects signal is shifted from the first region to the second region of the unit gain response curve and the contrast corresponding to at least the first non-stochastic feature signal relative to the stochastic effects signal is increased from the first contrast level to the second contrast level;

applying an inverse two-dimensional Fourier transform to the first modified transformed image data in the spatial frequency domain to transform the first modified transformed image data into first modified image data;

detecting the first modified image data to transform the first modified image data into the pixel domain, the first modified image data in the pixel domain having at least an amplitude;

processing the first modified image data in the pixel domain to normalize the amplitude of the first modified image data in the pixel domain to produce first normalized image data; and

modulating the first normalized image data with the first image data to produce the first enhanced image data.

**11.** A method, as claimed in Claim 7, further comprising the step of:

performing a cepstral analysis on the first image data to attenuate at least a portion of the stochastic effects signal.

First Image Data

↓

Perform a Cepstral
Analysis on the
First Image Data        / 10

↓

Display First
Cultural Object
and/or First
Replicated Object       / 40

# Fig. 1

First Image Data

Process First Image Data from Pixel Domain into the Spatial Quefrency Domain to Obtain Separable Cepstral Coefficients /12

Process a First Cepstral Coefficient Corresponding to Corruption Signal to Attenuate Corruption /20

Process a First Cepstral Coefficient Corresponding to Cultural Object Signal and/or Replicated Object Signature to Obtain Cultural Object and/or Replicated Object Signature in Pixel Domain /30

Fig. 2

Display Cultural Object and/or Replicated Object /42

First Image Data having Signals
Corresponding to at least a First
Cultural Object and Corruption

Apply Fourier Transform — 114

Apply Complex Logarithm — 116

Apply Inverse Fourier Transform — 118

Detect
First Cultural
Object in Spatial
Quefrency
Domain? — Yes → Map Cepstral Coefficients to Produce
Displayable Representations of
Cepstral Coefficient of First Cultural
Object — 122

No

Modify at least a First Cepstral
Coefficient to Attenuate
Corruption Signal
and/or Enhance the
First Cultural Object Signal — 120 ← Display Representation in
Spatial Quefrency Domain — 124

First Cultural
Object Detectable

Apply Fourier Transform — 132

Apply Inverse Complex Logarithm — 134

Apply Inverse Fourier Transform — 136

Display First Cultural Object
in Pixel Domain — 142

First Cultural
Object Detectable

Fig. 3

Fig. 4

First Image Data having Signals
Corresponding to at least a First
Replicated Object and Corruption

Apply Fourier Transform — 214

Apply Complex Logarithm — 216

Apply Inverse Fourier Transform — 218

Detect
First Replicated
Object in Spatial
Quefrency
Domain? — 220

Yes → Map Cepstral Coefficients
to Produce Displayable
Representation of Cepstral
Coefficient of First Replicated Object — 222

No

Modify at least a First Cepstral
Coefficients to Attenuate Corruption
Signal and/or to Enhance First
Replicated Object Signature

Display Representation in Spatial
Quefrency Domain — 224

First Replicated
Object Detectable

Apply Fourier Transform — 232

Apply Inverse Complex Logarithm — 234

Apply Inverse Fourier Transform — 236

Display Enhanced First Replicated
Object in Pixel Domain — 242

First Replicated
Object Detectable

Fig. 5

## TIME SERIES

Fig. 6A

$\dfrac{y_i}{}$

$\dfrac{x}{i}$

time

## CEPSTRUM

Fig. 6B

$\dfrac{w_m}{}$

$\dfrac{x}{m}$

quefrency

Replicated Triangle Signal with $\sigma = 0.05$

TIME SERIES

Fig. 7A

$\frac{x_i}{}$

time

CEPSTRUM

Fig. 7B

$x_m$

quefrency

Replicated Triangle Signal with $\sigma = 0.1$

## TIME SERIES

## Fig. 8A

## CEPSTRUM

## Fig. 8B

Single Triangle Signal with σ = 0.05

Fig. 9

First Image Data

300

310

Cepstral
Analyzer

340.

Display Device

# Fig. 10

First Image Data

Fourier Transformer — 414

Complex Logarithm Processor — 416

Inverse Fourier Transformer — 418

420 — Cepstral Coefficients Modifier

Mapper — 422

Display Device — 424

Fourier Transformer — 432

Inverse Complex Logarithm Processor — 434

Inverse Fourier Transformer — 436

442 — Display Device

# Fig. 11

EP 0 977 149 A2

FIG-12

$A(f) = K(a + bf) \exp[-(bf)^c]$

$K = 2.6507$
$a = 0.0192$
$b = 0.114$
$c = 1.1$

$f_N = 20$

Nyquist at 24"
Viewing Distance
for 100
Pixels/Inch

Spatial Frequency f (Cycles/Degree)

$f_1$ = 5.0 Cycles/Degree
$f_2$ = 11.5 Cycles/Degree

$I_1 = \int_0^5 A(f)\,df \approx 2.89$

$I_2 = \int_5^{11.5} A(f)\,df \approx 6.31$

$I_3 = \int_{11.5}^{20} A(f)\,df \approx 6.09$

$I_T = \int_0^{20} A(f)\,df \approx 15.29$

$P_0 = I_1/(f_1 - 0) = 0.58$

$P_1 = I_2/(f_2 - f_1) = 0.97$

$P_2 = I_3/(f_N - f_2) = 0.72$

$P_T = I_T/(f_N - 0) = 0.76$

FIG. 13

FIRST IMAGE
DATA

512

PROCESS FIRST IMAGE DATA TO
MODIFY SPATIAL FREQUENCY
CHARACTERISTICS OF STOCHASTIC
EFFECTS SIGNAL FROM FIRST
REGION TO SECOND REGION OF
UNIT GAIN RESPONSE CURVE TO
PRODUCE FIRST ENHANCED
IMAGE DATA

542

DISPLAY FIRST ENHANCED IMAGE
CORRESPONDING TO FIRST
ENHANCED IMAGE DATA

Fig. 14

FIRST IMAGE
DATA

650

PERFORM
CEPSTRAL
ANALYSIS

Yes

CASCADE
WITH OTHER IMAGE
ENHANCEMENT
TECHNIQUE

No

614

APPLY TWO-DIMENSIONAL FOURIER
TRANSFORM TO FIRST IMAGE DATA

618

SUBSTITUTE A UNITY VALUE FOR SPATIAL
FREQUENCIES OF AMPLITUDES OF NON-
STOCHASTIC FEATURE AND STOCHASTIC
EFFECT SIGNALS

622

APPLY INVERSE TWO-DIMENSIONAL
FOURIER TRANSFORM

626

DETECT AND NORMALIZE

630

MODULATE WITH FIRST IMAGE DATA

ATTENUATE?

No

Yes

634

SHADOW TUNE FIRST ENHANCED IMAGE DATA

DISPLAY FIRST ACCENTUATED
IMAGE

642

Fig. 15

FIRST IMAGE
DATA

750

CEPSTRAL
PROCESSOR

710

714
FOURIER TRANSFORMER

718
PROCESSOR FOR SUBSTITUTING
UNITY VALUE

722
INVERSE FOURIER TRANSFORMER

726
DETECTOR AND NORMALIZER

730
MODULATOR

734
SHADOW
TUNER

DISPLAY DEVICE

742

Fig. 16